# EUROPÄISCHE PATENTANMELDUNG

(11) **EP 1 690 813 A1**
(43) Veröffentlichungstag der Anmeldung: **16.08.2006**
(21) Anmeldenummer: 05100893.6
(22) Anmeldetag: 09.02.2005
(51) Int. Cl.: B65G 47/14, B65G 17/24, B29C 49/42

(54) **Vorrichtung und Verfahren zum Gleichrichten von länglichen, vorzugsweise zylindrischen Gegenständen mit einer Profilkontur**

(71) Anmelder: Nov Hau AG Engineering, 8274 Tägerwilen (CH)
(72) Erfinder: Klaiber, Franz, 78564 Wehingen (DE); Novak, Peter, 8274 Tägerwilen (CH)
(74) Vertreter: Hepp, Dieter

(57) **Zusammenfassung**

Eine Vorrichtung zum Gleichrichten von länglichen, vorzugsweise zylindrischen Gegenständen mit einer Profilkontur, insbesondere von Rohlingen (2) zur Herstellung von Kunststoff-Behältern durch Blasformgebung weisen einen um eine Rotationsachse (R) drehbaren Drehtisch (20) zur Aufnahme der ungeordneten Gegenstände auf. Über dem Drehtisch (20) ist in einem Umfangsbereich ein Leitelement (12) derart angeordnet, dass zwischen dem Drehtisch (20) und dem Leitelement (12) ein Spalt (13) zum Erfassen der Gegenstände an seiner Profilkontur und zum Bewegen der Gegenstände entlang des Leitelements in Drehrichtung gebildet ist, wobei ein sich an die Profilkontur anschliessender Abschnitt der Gegenstände jeweils radial nach aussen durch den Spalt (13) durchführbar ist. Zum Kanalisieren der Gegenstände auf dem Drehtisch ist ein Zusatzelement (17) vorgesehen, welches in Bezug auf das Leitelement (12) koaxial nach innen versetzt angeordnet ist. Das Zusatzelement (17) weist in einem Umfangsabschnitt (U) eine Aussparung (18) zum Durchlassen der Gegenstände radial nach aussen auf.

## Beschreibung

Die Erfindung betrifft eine Vorrichtung und ein Verfahren zum Gleichrichten von länglichen, vorzugsweise zylindrischen Gegenständen mit einer Profilkontur mit den Merkmalen des Oberbegriffs der Ansprüche 1 und 20. Ein bevorzugtes Anwendungsgebiet der vorliegenden Erfindung sind Rohlinge zur Herstellung von Kunststoffbehältern durch Blasformgebung, insbesondere PET-Flaschen. Solche Rohlinge weisen einen umlaufenden Kragen als Profilkontur auf.

Ein länglicher Gegenstand mit einer Profilkontur im Sinne der vorliegenden Erfindung ist ein (einstückiger oder mehrteiliger) Körper, der in Bezug auf seine Achse lang gestreckt ist. Unter einer Profilkontur wird eine Abstufung des Gegenstands im Längsschnitt entlang seiner Achse verstanden, wodurch ein Anschlag in Bezug auf die Achsrichtung entsteht.

Eine gattungsmässig vergleichbare Vorrichtung zum Gleichrichten von PET-Rohlingen (sog. "preforms") beschreibt beispielsweise die WO Al 2004/069700. Die Vorrichtung gemäss der WO A1 2004/069700 weist gegenläufig rotierende etwa horizontal angeordnete Scheiben auf, wobei im äusseren Randbereich einer der Scheiben (nach unten offene) Aufnahmen für einzelne Rohlinge vorgesehen sind. Unterhalb dieser Scheibe ist eine feststehende Scheibe vorgesehen, die in einem Umfangsabschnitt eine ringstückförmige Aussparung für die Rohlinge aufweist. Die in der Aufnahme liegend gehaltenen und in Umfangsrichtung ausgerichteten Rohlinge werden durch die Drehbewegung der Scheibe der Aussparung zugeführt. Hier werden die Rohlinge in einem ersten Umfangsabschnitt der Aussparung derart an ihrem Kragen erfasst, dass die Rohlinge in hängender Position etwa vertikal ausgerichtet sind. Der daran anschliessende zweite Abschnitt der Aussparung weist eine grössere Breite auf, wodurch die Rohlinge durch die Aussparung fallen, wo sie von einer Führungsschiene übernommen werden, welche die Rohlinge schräg nach unten gleitend weiter transportiert. Durch die Positionierung der Rohlinge in der Aufnahme in Umfangsrichtung ist die Leistungsfähigkeit dieser Gleichricht-Vorrichtung verhältnismässig gering.

Es ist deshalb eine Aufgabe der vorliegenden Erfindung, die Nachteile des Bekannten zu vermeiden, insbesondere eine Vorrichtung und ein Verfahren der eingangs genannten Art zu schaffen, die sich durch eine hohe Leistungsfähigkeit und Kapazität auszeichnet. Weiter soll die Vorrichtung einfach in der Handhabung sein sowie eine hohe Prozesssicherheit gewährleisten. Sodann soll sich die Vorrichtung durch einen geringen Platzbedarf auszeichnen.

Erfindungsgemäss werden diese Aufgaben mit einer Vorrichtung mit den Merkmalen von Anspruch 1 gelöst.

Eine Vorrichtung zum Gleichrichten von länglichen, vorzugsweise zylindrischen Gegenständen mit einer Profilkontur weist einen um eine Rotationsachse drehbaren Drehtisch zur Aufnahme der ungeordneten Gegenstände auf. Diese Gegenstände können über eine Förder- und Zuführeinrichtung vorzugsweise von oben fallend etwa mittig auf den drehenden Drehtisch aufgegeben werden. Die erfindungsgemässe Vorrichtung zeichnet sich dadurch aus, dass in einem Umfangsabschnitt über dem Drehtisch ein Leitelement derart angeordnet ist, dass zwischen dem Drehtisch und dem Leitelement ein Spalt zum Erfassen der Gegenstände an seiner Profilkontur und zum Bewegen der Gegenstände in Drehrichtung des Drehtisches entlang des Leitelements gebildet ist, wobei ein sich an die Profilkontur anschliessender Abschnitt des Gegenstands radial nach aussen durch den Spalt durchführbar ist. Im Falle beispielsweise von Rohlingen zur Herstellung von Kunststoffbehältern wäre damit der Grundkörper des Rohlings radial nach aussen durch den Spalt geführt, während der Kragen zusammen mit dem Gewindeabschnitt bezogen auf das Leitelement radial nach innen gerichtet wäre. Selbstverständlich eignet sich die Vorrichtung beispielsweise auch für Schrauben mit einem Schraubenkopf (als Profilkontur) und einem an diesem anschliessenden Gewindeabschnitt. Die Oberfläche des Drehtisches, auf welchen die Gegenstände aufgegeben werden, verläuft dabei vorteilhaft senkrecht zu dessen Rotationsachse, wobei dieser bevorzugt horizontal angeordnet ist. Die vorliegende Anordnung ermöglicht eine optimale Ausnutzung der Zentrifugalkraft. Die Vorrichtung besteht aus wenigen Einzelkomponenten und lässt sich mit verhältnismässig geringem Materialaufwand herstellen. Der Drehtisch kann eine Scheibe enthalten. Die Scheibe ist in der Draufsicht vorzugsweise kreisförmig ausgestaltet, wobei die dem Leitelement zugewandte Scheibenoberfläche besonders bevorzugt eben ausgebildet ist. Selbstverständlich ist eine konkave oder konvexe Ausgestaltung der Scheibenoberfläche denkbar. Für die Drehung des Drehtisches kann unterhalb des Drehtisches in der Rotationsachse ein Getriebe angeordnet sein. Der Antrieb kann über einen Elektromotor erfolgen.

In einer ersten Ausführungsform ist das Leitelement in der Draufsicht etwa kreisförmig ausgestaltet. Somit können die vom Leitelement erfassten Gegenstände in einer Kreisbahn um die Rotationsachse entlang des Leitelements bewegt werden. Diese Anordnung gewährleistet eine optimale Ausnutzung der Drehbewegung des Drehtisches.

In einer alternativen Ausführungsform ist das Leitelement in der Draufsicht spiralförmig ausgestaltet. Ein Vorteil dieser Anordnung besteht darin, dass ein verhältnismässig langer Weg geschaffen wird, auf welchem die Gegenstände zum Gleichrichten orientiert werden können. In der Praxis hat sich gezeigt, dass diese Anordnung besonders für Schrauben geeignet ist.

Vorteilhaft ist es, wenn das Leitelement den Rand des Drehtisches wenigstens teilweise begrenzt. Besonders vorteilhaft ist es, wenn das Leitelement den Rand des Drehtisches ganz begrenzt bzw. in Umfangsrichtung geschlossen ist. Auf diese Weise könnte die gesamte Oberfläche des Drehtisches zum Gleichrichten der Gegenstände genutzt werden.

Das Leitelement kann ein Leitprofil, beispielsweise ein Leitblech sein. Ein Vorteil dieser Konstruktion besteht insbesondere darin, dass durch den Abstand zwischen Drehtisch und Leitblech auf einfache Art und Weise ein Spalt für die Rohlinge definiert wird. Das bevorzugt feststehende Leitblech kann achsparallel zur Rotationsachse des Drehtisches verlaufen. Ein solches Leitblech kann aus Stahl oder Aluminium bestehen. Eine solche Anordnung lässt sich verhältnismässig einfach und kostengünstig herstellen. Bei empfindlichen Gegenständen ist es vorstellbar, das Leitblech durch einen Schutzüberzug (beispielsweise aus einem elastischen Material wie Gummi) zu versehen. Selbstverständlich ist es denkbar, das Leitprofil aus Kunststoff oder einem Faserverbundwerkstoff herzustellen.

Ausgehend von im wesentlichen zylindrischen Gegenständen mit einer Profilkontur und einem daran anschliessenden Abschnitt, wobei der Durchmesser der Profilkontur grösser als der Durchmesser des genannten Abschnitts ist und dieser Abschnitt radial nach aussen durch den Spalt des Leitelements durchführbar sein soll, kann der Spalt wie folgt ausgebildet sein: die Höhe des Spalts liegt zwischen dem Durchmesser der Profilkontur und dem Durchmesser des Abschnitts und bevorzugt zwischen dem Durchmesser der Profilkontur und dem Durchmesser des Abschnitts zuzüglich der Hälfte der Differenz gebildet durch den Durchmesser der Profilkontur und dem Durchmesser des Abschnitts. Eine solche Anordnung gewährleistet ein einfaches Erfassen der Gegenstände durch das Leitelement. Sodann können die Gegenstände in einer rollenden Relativbewegung entlang des Spalts bzw. Leitelements bewegt werden, womit die Gegenstände kaum Vibrationen und Schlägen ausgesetzt sind.

Gemäss einer weiteren Ausführungsform kann zum Kanalisieren der Gegenstände auf dem Drehtisch wenigstens ein Zusatzelement vorgesehen sein, welches in Bezug auf das Leitelement nach innen versetzt, insbesondere konzentrisch angeordnet ist und wobei das Zusatzelement in einem Umfangsabschnitt eine Freistellung, insbesondere eine Aussparung zum Durchlassen der Gegenstände radial nach aussen aufweist. Das Zusatzelement kann in der Draufsicht etwa kreisförmig ausgestaltet sein. Das Zusatzelement kann aus einem Blech gebildet werden. Das Zusatzelement kann einen geschlossenen Kreis bilden, wobei auf einem Umfangs- bzw. Kreisabschnitt eine Aussparung zum Durchführen der Gegenstände vorgesehen ist. Selbstverständlich könnte der Kreis auch durch eine Freistellung unterbrochen sein. Die Freistellung liesse sich damit auf besonders einfache Art und Weise mit einem Blech herstellen.

Zusätzlich können die Gegenstände mit Hilfe des Zusatzelements vororientiert werden. Dazu kann zwischen dem Drehtisch und dem Zusatzelement ein Spalt zum Erfassen des Gegenstands an seiner Profilkontur und zum Bewegen des Gegenstands entlang des Zusatzelements vorgesehen sein. Das Zusatzelement kann auf gleiche Art und Weise wie das vorgängig genannte Leitelement ausgestaltet sein. Analog zum Leitelement ist also ein an die Profilkontur anschliessender Abschnitt des Gegenstands radial nach aussen durch den Spalt des Zusatzelements durchführbar. Die Ausgestaltung des Zusatzelements unterscheidet sich vom Leitelement im Wesentlichen nur dadurch, dass die vorgängig genannte Freistellung zum Durchlassen der Gegenstände radial nach aussen vorgesehen sein muss. Die Anordnung hat den Vorteil, dass durch die Vororientierung die Leistungsfähigkeit und Kapazität der Vorrichtung wesentlich erhöht werden kann.

Vorteilhaft ist es, wenn das Leitelement in eine Transportschiene enthaltend zwei in einem Abstand zueinander angeordneten parallelen Schienenelementen übergeht, welche einen Spalt zum hängenden Transportieren der Gegenstände zwischen den Schienenelementen bilden. Der Spalt zwischen den Schienenelementen schliesst sich dabei an den Spalt zwischen Drehtisch und Leitelement an. Besonders bevorzugt verläuft dabei das Leitelement tangential zur Transportschiene.

Besonders vorteilhaft ist es, wenn das äussere Schienenelement unmittelbar an das Leitelement anschliesst. Dadurch ist ein optimaler Übergang und Pufferspeicher zwischen Leitelement und Transportschiene geschaffen.

Zwischen Leitelement und Transportschiene kann aber auch ein weiteres Schienenelement vorgesehen sein, welches den Aussenumfang des Drehtisches randseitig begrenzt. Dieses Schienenelement bildet somit zum Drehtisch (bzw. der Scheibe) einen Spalt zur Aufnahme der Rohlinge, wodurch die Rohlinge entlang des Aussenumfangs des Drehtisches in etwa hängender Position bewegt werden können. An dieses Schienenelement kann eines der Schienenelemente der Transportschiene zum hängenden Transport der Rohlinge anschliessen.

Vorteilhaft ist es, wenn eine antreibbare Transportvorrichtung zum Weitertransport der durch den Drehtisch und das Leitelement gleichgerichteten Gegenstände vorgesehen ist. Diese Transportvorrichtung kann alternativ zum vorgängig genannten Transportsystem mit der Transportschiene vorgesehen sein. Denkbar ist auch eine Kombination dieser zwei Transportsysteme. Eine antreibbare Transportvorrichtung hat den Vorteil, dass die gleichgerichteten Gegenstände unter Beibehaltung ihrer Orientierung im Wesentlichen in alle Raumachsen transportierbar sind. Ein Vorteil dieser Ausführungsform besteht somit darin, dass der Drehtisch nicht in einer erhöhten Position beispielsweise in Bezug auf eine Blaseinrichtung für PET-Flaschen angeordnet sein muss. Eine solche Transportvorrichtung eignet sich auch in Kombination mit konventionellen Vorrichtungen zum Gleichrichten von länglichen, vorzugsweise zylindrischen Gegenständen mit einer Profilkontur, beispielsweise von Rohlingen für PET-Flaschen.

Die Transportvorrichtung kann eine feststehende Führungsschiene und eine Mehrzahl von entlang der Führungsschiene in Transportrichtung bewegbaren und in einer Reihe angeordneten Rollen aufweisen. Die Rollen haben Rollenachsen, die jeweils etwa rechtwinklig zur Transportrichtung verlaufen können. Die Rollen sind derart von der Führungsschiene beabstandet, dass jeweils zwischen zwei Rollen und der Führungsschiene ein Gegenstand positionierbar ist. Die Gegenstände sind dadurch während des Transportvorgangs achsparallel zu den Rollenachsen der Rollen bzw. rechtwinklig zur Transportrichtung ausgerichtet. Vorteil einer derartigen Transportvorrichtung ist insbesondere, dass auf einfache Art und Weise eine Aufwärtsbewegung der Gegenstände ermöglicht wird. Eine solche Transportvorrichtung kann weiter automatisiert gefahren werden. Sodann ist durch die spezielle Lagerung der Gegenstände jeweils zwischen zwei Rollen und der Führungsschiene ein Verkeilen von Gegenständen miteinander ausgeschlossen. Anstatt der Rollen sind auch anderer Wälzkörper aber auch Gleitkörper, insbesondere nicht rotierende Gleitmitnehmer vorstellbar. Zum geordneten Bereitstellen der Rohlinge für die Transportvorrichtung kann ein drehbar gelagertes Eintaktrad vorgesehen werden, das vorteilhaft im Bereich des Übergangsbereichs des Leitelements zur Transportvorrichtung angeordnet ist. Mit Hilfe des Eintaktrads können die Rohlinge voneinander beabstandet und so der Transportvorrichtung auf vorteilhafte Weise übergeben werden. Ein Verklemmen der Rohlinge in der Transportvorrichtung kann so vermieden werde. Das Eintaktrad kann beispielsweise über einen Schrittmotor antreibbar sein, wodurch die taktweise Übergabe an die Transportvorrichtung besonders günstig erfolgen könnte. Ein solches Eintaktrad weist in seinem Umfangsbereich vorzugsweise gleichmässig über den Umfang verteilte Aussparungen zur Aufnahme eines Rohlings auf. Selbstverständlich sind statt eines Eintaktrads auch andere Taktsysteme vorstellbar.

Besonders vorteilhaft ist es, wenn die Führungsschiene der Transportvorrichtung eine Führungsnut und/oder die Rollen jeweils im Bereich des Rollenumfangs eine umlaufende Nut aufweisen, wobei die Führungsnut der Führungsschiene bzw. die umlaufende Nut zum formschlüssigen Erfassen der Profilkontur der Rohlinge ausgebildet ist. Beispielsweise können diese Nuten zum Kragen der Rohlinge korrespondieren. Auf diese Weise ist eine präzise und sichere Führung der Gegenstände gewährleistet.

Zum Bewegen der Rollen der Transportvorrichtung in Transportrichtung können Zugmittel vorgesehen sein. Zugmittel können eine Kette oder einen Zahnriemen enthalten. Besonders bevorzugt ist die Kette eine Rollen- bzw. Hülsenkette oder eine 3-D Kette, allenfalls auch eine Zahnkette. Zugmittel haben den Vorteil, dass die Transportvorrichtung vielfältig einsetzbar ist. Insbesondere ist eine Aufwärtsbewegung der Gegenstände kein Problem.

Sofern das Zugmittel eine Kette mit einer Mehrzahl von Kettenelementen ist, wobei zwei Kettenelemente jeweils gelenkig miteinander verbunden sind, dann ist es besonders vorteilhaft, wenn die Rollen auf verlängerten Gelenkachsen angeordnet sind. Auf diese Art und Weise lassen sich die Rollen besonders einfach mit den Ketten verbinden. Würden statt der Rollen Gleitkörper verwendet, so könnte man diese starr mit der Kette verbinden.

Eine parallel zur Führungsschiene verlaufende Rollenführung kann die Rollen abstützen. Somit können die Rollen auf einfache Art und Weise rollend entlang der Rollenführung geführt werden.

Eine Kombination der Transportvorrichtung mit der vorgängig beschriebenen Vorrichtung zum Gleichrichten von länglichen, vorzugsweise zylindrischen Gegenständen mit einer Profilkontur ist nicht zwingend erforderlich. Ein weiterer Aspekt der Erfindung besteht somit darin, dass die vorgängig genannte Transportvorrichtung zum Transport von länglichen, vorzugsweise zylindrischen Gegenständen mit einer Profilkontur auch in Kombination mit konventionellen Gleichricht-Vorrichtungen vorteilhaft sein kann.

Die Transportvorrichtung zum Transport von länglichen, vorzugsweise zylindrischen Gegenständen mit einer Profilkontur, weist eine feststehende Führungsschiene und eine Mehrzahl von entlang der Führungsschiene in Transportrichtung bewegbaren, in einer Reihe angeordneten Wälzkörper auf, wobei die Wälzkörper derart von der Führungsschiene beabstandet sind, dass jeweils zwischen zwei Wälzkörpern und der Führungsschiene ein Gegenstand erfassbar und auf der Führungsschiene abwälzbar ist. Die senkrecht zur Transportrichtung bzw. zur Führungsschiene ausgerichteten Gegenstände sind dabei bevorzugt in einer Dreipunktelagerung zwischen Wälzkörpern und Führungsschiene gehalten. Als Wälzkörper werden bevorzugt Rollen eingesetzt, die im Wesentlichen zylindrisch ausgebildet sind. Die jeweiligen Rollenachsen können dabei senkrecht zur Transportrichtung bzw. achsparallel zur Achse der länglichen Gegenstände verlaufen. Wälzkörper können selbstverständlich auch kugel- oder kegel- bzw. kegelstumpfförmig ausgebildet sein. Denkbar sind auch nicht rotierende Gleitkörper und insbesondere Gleitmitnehmer anstatt drehbarer Wälzkörper. Denkbar ist weiterhin, dass die Wälzachse der Wälzkörper und die Achse des Gegenstands schräg zueinander verlaufen können. Dies kann insbesondere auch für die Rollenachse gelten. Ein paralleler Verlauf von Wälzachsen und Achsen der Gegenstände ist nicht zwingend erforderlich.

Die Transportvorrichtung eignet sich insbesondere zum Zuführen von Rohlingen zur Herstellung von Kunststoffbehälter durch Blasformgebung, insbesondere für PET-Flaschen an eine Blaseinrichtung zum Herstellen solcher PET-Flaschen.

Die Erfindung betrifft auch ein Verfahren mit den Merkmalen von Anspruch 20. Zum Gleichrichten von ungeordnet anfallenden länglichen, vorzugsweise zylindrischen Gegenständen mit einer Profilkontur werden die Gegenstände einem um eine Rotationsachse rotierenden Drehtisch einer Zentrifugalkraft ausgesetzt. Die Gegenstände werden dann von einem im Umfangsbereich des Drehtisches angeordneten Leitelement derart an der Profilkontur erfasst, dass ein sich an die Profilkontur anschliessender Abschnitt des Gegenstands radial nach aussen durchgeführt wird. Die ungeordnet anfallenden Gegenstände können beispielsweise über eine Zuführeinrichtung etwa mittig bzw. im Bereich der Rotationsachse des Drehtisches aufgegeben werden.

Die Gegenstände können unter Beibehaltung der radialen Ausrichtung und unter Ausnützung der Drehbewegung des Drehtisches vorzugsweise rollend entlang dem Leitelement bewegt werden. Da die Gegenstände mit Hilfe des Spaltes entlang dem Leitelement geführt sind, kann eine Rollbewegung der Gegenstände auf einfache Art und Weise erzielt werden. Eine solche Rollbewegung soll bevorzugt mit wenig oder kein Schlupf erfolgen, wodurch die Drehbewegung des Drehtisches optimal ausgenützt wird und die Gegenstände in der Richtung der Übergangsstelle beschleunigt werden.

Zum Optimieren des Verfahrens kann es notwendig sein, dass die Gegenstände durch eine Aussparung oder eine andere Freistellung, die in einem Umfangsabschnitt des nach innen in Bezug auf das Leitelement versetzt angeordneten Zusatzelement angeordnet ist, hindurch gelassen werden. Die Gegenstände können auf einfache Art und Weise kanalisiert werden und treffen somit in einem durch die Aussparung vorbestimmten Umfangsbereich auf das Leitelement auf.

Ein weiterer Aspekt der Erfindung betrifft ein Verfahren zum Transportieren von länglichen, vorzugsweise zylindrischen Gegenständen mit einer Profilkontur, insbesondere von Rohlingen zur Herstellung von Kunststoffbehältern, insbesondere für PET-Flaschen, bei welchem die Gegenstände derart von einer feststehenden Führungsschiene und jeweils zwei in Transportrichtung bewegten Wälzkörpern einer Transportvorrichtung erfasst werden, dass sie jeweils in einer Dreipunktlagerung rollend zwischen der Führungsschiene und den Wälzkörpern in Transportrichtung bewegt werden. Für eine optimale Rollbewegung der Gegenstände verlaufen deren Achsen vorteilhaft senkrecht zur Transportrichtung. Die Gegenstände können dabei besonders vorteilhaft achsparallel zu den Rollenachsen der Rollen ausgerichtet sein. Werden anstatt der Wälzkörper Gleitkörper, insbesondere nichtrotierende Gleitmitnehmer verwendet, so wäre es sogar vorstellbar, dass die Rohlinge in einer reinen Schiebebewegung in Transportrichtung bewegt werden.

Die Gegenstände können mit Hilfe der Transportvorrichtung von oben nach unten bzw. aufwärts transportiert werden. Besonders bevorzugt werden die Gegenstände von einer Gleichricht-Vorrichtung einer auf einer höheren Ebene angeordneten Bearbeitungsvorrichtung zugeführt. Auf diese Weise könnten beispielsweise PET-Flaschen rationell und günstig hergestellt werden.

Wenn die Gegenstände Rohlinge zur Herstellung von Kunststoffbehältern, insbesondere für PET-Flaschen sind, ist es vorteilhaft, wenn die Rohlinge mit Hilfe der Transportvorrichtung über Kopf der Bearbeitungsvorrichtung, insbesondere einer Blaseinrichtung zum Herstellen von PET-Flaschen zugeführt werden.

Weitere Einzelmerkmale und Vorteile der Erfindung ergeben sich aus der nachfolgenden Beschreibung der Ausführungsbeispiele und aus den Zeichnungen. Es zeigen:
- Figur 1: einen Querschnitt durch einen Rohling für Kunststoffbehälter,
- Figur 2: eine Seitenansicht auf eine Schraube,
- Figur 3: eine perspektivische Darstellung einer erfindungsgemässen Vorrichtung, insbesondere zum Gleichrichten von Rohlingen gemäss Figur 1,
- Figur 4: eine perspektivische Darstellung und Teilschnitt des Ausführungsbeispiels gemäss Figur 3,
- Figur 5: eine perspektivische Darstellung eines Drehtisches mit Leit- und Zusatzelement,
- Figur 6: eine Draufsicht auf den Drehtisch gemäss Figur 5,
- Figur 7: eine perspektivische Darstellung eines Leitelements und eines Zusatzelements,
- Figur 8: eine Seitenansicht des Drehtisches gemäss Figur 5,
- Figur 9: ein Teil-Querschnitt des Drehtisches gemäss Figur 5 in der Ebene C-C,
- Figur 10: ein Teil-Querschnitt des Drehtisches gemäss Figur 5 in der Ebene E-E
- Figur 11: eine perspektivische Darstellung eines alternativen Ausführungsbeispiels der Vorrichtung,
- Figur 12: eine perspektivische Darstellung einer Vorrichtung gemäss einem weiteren Ausführungsbeispiel,
- Figur 13: eine perspektivische Darstellung einer Vorrichtung zum Gleichrichten von Gegenständen und eine Transportvorrichtung zum Weiterführen der gleichgerichteten Gegenstände,
- Figur 14: eine vergrösserte perspektivische Darstellung einer Transportvorrichtung,
- Figur 15: eine perspektivische und schematische Ansicht einer Transportvorrichtung mit einem einzelnen Rohling gemäss Ausführungsbeispiel aus Figur 1,
- Figur 16: eine Ansicht in Pfeilrichtung x der Transportvorrichtung gemäss Figur 15,
- Figur 17: ein Schnitt durch eine Transportvorrichtung gemäss winkligem Schnittverlauf (B-B) von Figur 16,
- Figur 18: eine Detailansicht (Y) von Figur 17,
- Figur 19: eine Vorderansicht einer Kette mit zwei Rollen einer Transportvorrichtung,
- Figur 20: ein Querschnitt durch die Kette und die Rollen gemäss Figur 19,
- Figur 21: eine perspektivische Darstellung des Leitelements gemäss Figur 7 mit einem Eintaktrad,
- Figur 22: eine Detailansicht des Eintaktrads gemäss Figur 21, und
- Figur 23: eine perspektivische Darstellung der GleichrichtVorrichtung und Transportvorrichtung gemäss Figur 13 mit einem Eintaktrad.

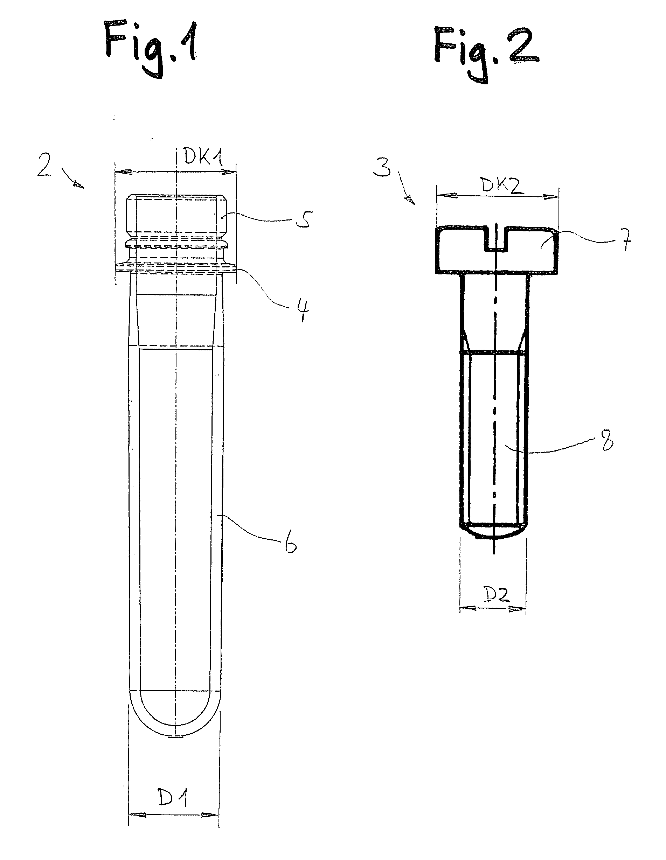

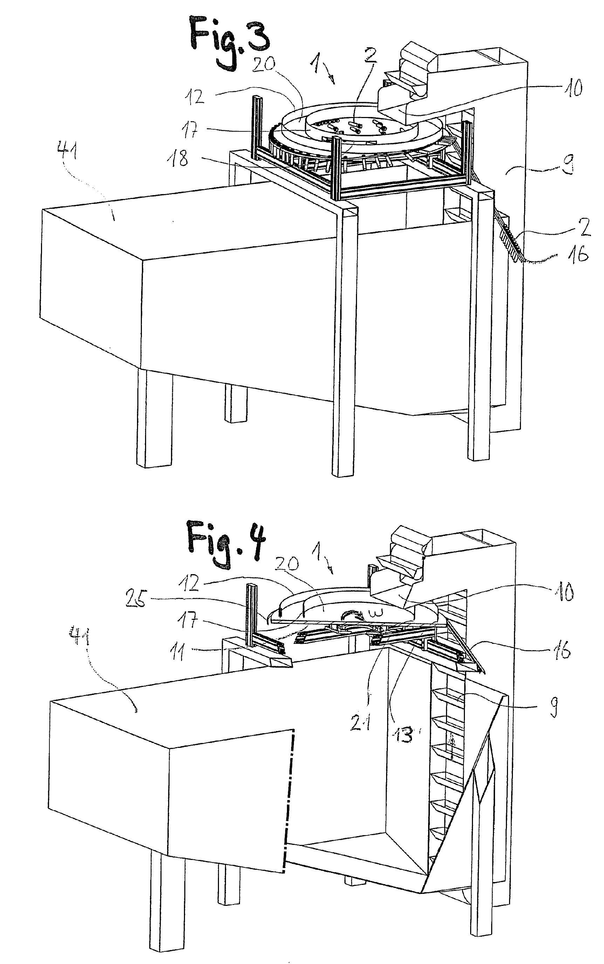

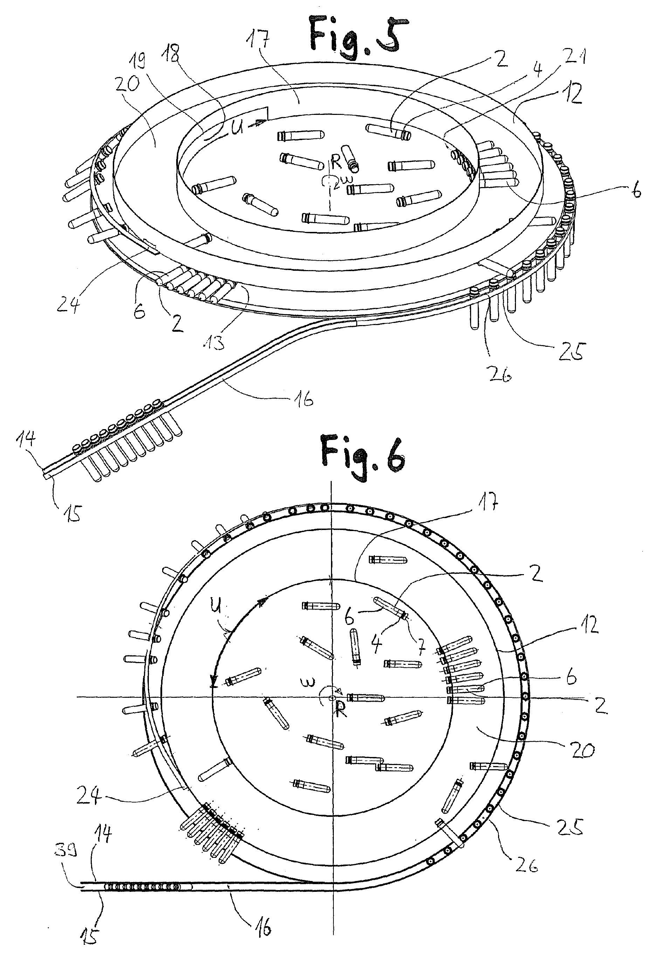

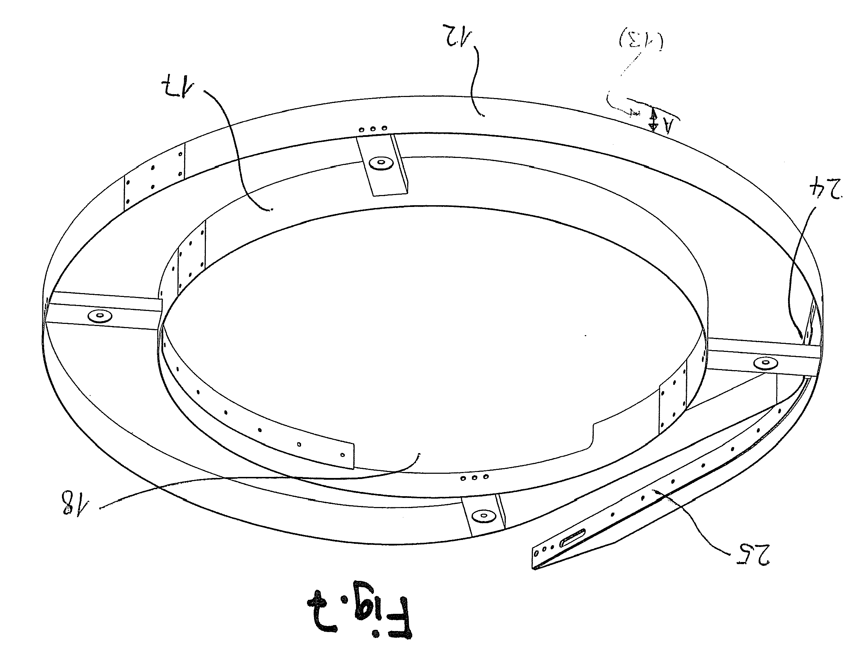

Die Figuren 1 und 2 zeigen Bespiele für längliche Gegenstände mit einer Profilkontur, die von der nachfolgend beschriebenen Vorrichtung bevorzugt gleichgerichtet werden können. Figur 1 zeigt einen Rohling 2 zur Herstellung von Kunststoffbehältern, insbesondere von PET-Flaschen. Dieser weist als Profilkontur einen umlaufenden Kragen 4 auf. Ein an den Kragen einstückig anschliessender Abschnitt ist ein Grundkörper 6, der in einer Blaseinrichtung zum eigentlichen Behälter aufblasbar ist. Selbstverständlich könnte der an die Profilkontur anschliessender Abschnitt 6 auch konisch - statt zylindrisch - ausgebildet sein. Auf der zum Grundkörper 6 in Bezug auf den Kragen 4 entgegengesetzten Seite ist ein Gewindeabschnitt 5 für einen Schraubverschluss angeordnet. Wie in Figur 2 gezeigt, besteht eine Schraube 3 im Wesentlichen aus einem Gewindeteil 8 und einem Schraubenkopf 7 als Profilkontur. Selbstverständlich ist der Anwendungsbereich nicht auf Schlitzschrauben beschränkt.

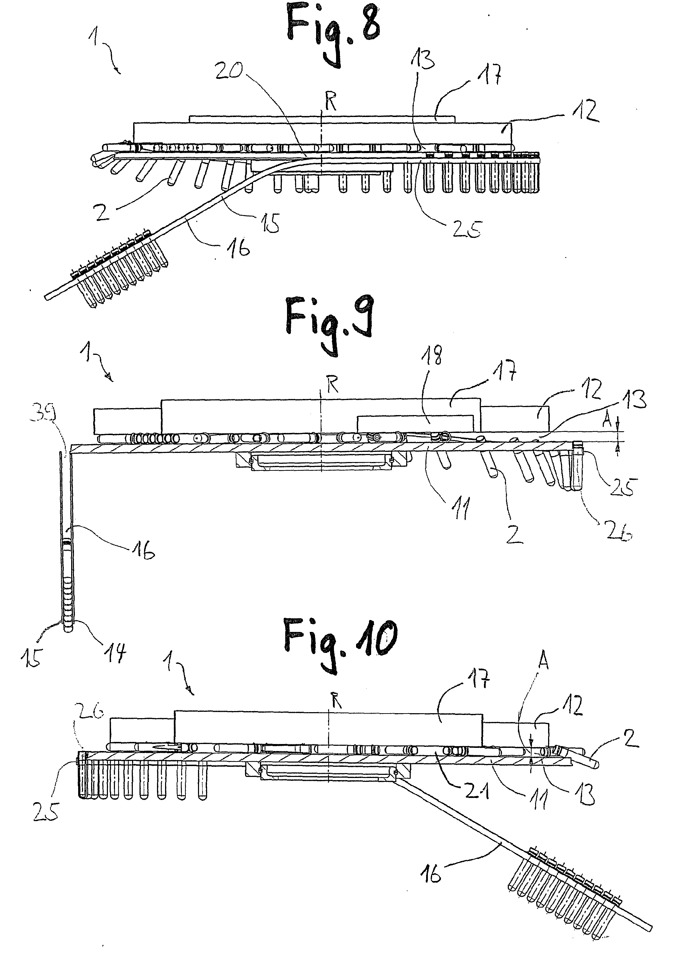

Die Figuren 3 und 4 zeigen eine mit 1 bezeichnete Vorrichtung zum Gleichrichten von Rohlingen 2 gemäss Figur 1. Über eine Zuführeinrichtung 10 werden Rohlinge 2 einem um eine Rotationsachse drehenden Drehtisch 20 aufgegeben. Wegen der Zentrifugalkraft werden die Rohlinge nach aussen bewegt. Über dem Drehtisch 20 ist ein Leitelement 12 sowie ein Zusatzelement 17 angeordnet, die zueinander in Bezug auf die Rotationsachse konzentrisch angeordnet sind. Aus Figur 4 geht hervor, dass zwischen Leitelement 12 bzw. Zusatzelement 17 und dem Drehtisch 20 ein Spalt 13 bzw. 21 gebildet ist. Wie Figur 4 weiter zeigt, enthält der Drehtisch 20 eine kreisförmige Scheibe 11. Die Scheibe 11 ist bevorzugt flach ausgebildet. Es ist aber denkbar, die dem Leitelement zugewandte Scheibenoberfläche (im Querschnitt) konvex oder konkav auszugestalten. Die Wirkungsweise der Vorrichtung 1 wird nachfolgend noch im Detail beschrieben.

Randseitig ist die Scheibe 11 durch ein umlaufendes Schienenelement 25 begrenzt, welches zum Aussenumfang des Drehtisches 20 bzw. der Scheibe einen Spalt 26 zur Aufnahme der Rohlinge 2 bildet. An den Spalt 26 (bzw. Schienenelement 25) schliesst ein Spalt 39 (bzw. Schienenelement 15) einer Transportschiene 16 mit zwei in einem Abstand zueinander angeordneten parallelen Schienenelementen 14 und 15 an. Mit Hilfe der Transportschiene 16 können die gleichgerichteten Rohlinge 2 hängend unter Ausnutzung der Gravitationskraft vom Drehtisch 20 wegtransportiert werden. Unterhalb des Drehtisches ist eine Wanne 41 als Vorratsbehälter für die als Schüttgut anfallenden Rohlinge vorgesehen. Von dort werden die Rohlinge mit Hilfe einer Fördereinrichtung, insbesondere eines Stetigförderers 9 zur Zuführeinrichtung 10 gefördert (die Förderrichtung ist mit einem Pfeil angedeutet).

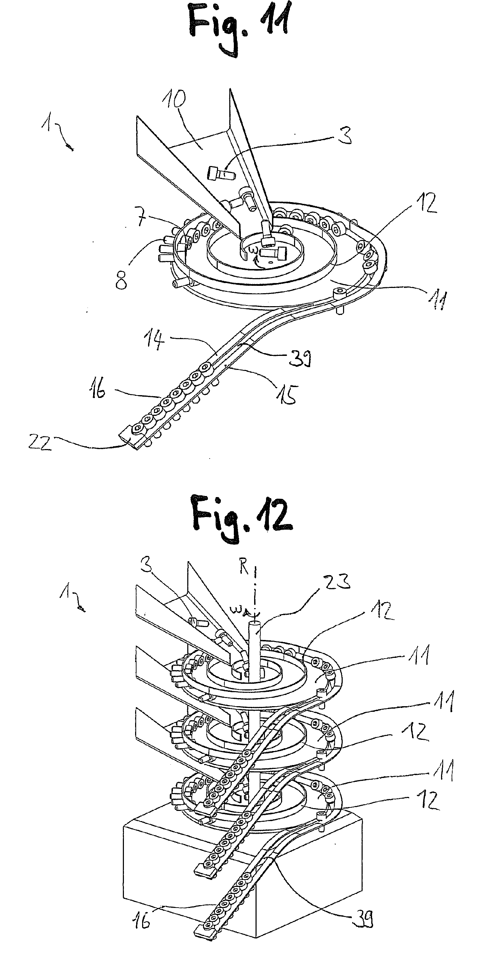

Wie die Figuren 5 und 6 zeigen, ist das Leitelement 12 sowie das Zusatzelement 17 in der Draufsicht kreisförmig ausgestaltet. Dabei umschliessen die beiden Elemente 12 und 17 den gesamten Umfang. Die Elemente 12 und 17 sind in einem Abstand über dem Drehtisch 20 angeordnet, wodurch ein Spalt zum Erfassen der Rohlinge 2 an ihrem Kragen 4 gebildet wird. Die Elemente 12 und 17 sind weiter im rechten Winkel zur Oberfläche des Drehtisches 20 angeordnet und verlaufen parallel zur Rotationsachse R. Das Leitelement 12 sowie das Zusatzelement 17 kann als Ring aus einem Metallblech, beispielsweise Stahl gebildet sein. Selbstverständlich können die Elemente 17 und 12 beispielsweise als Leitprofile auch aus einem anderen Material bestehen, beispielsweise aus Kunststoff oder faserverstärkten Materialien. Im Bereich eines Umfangsabschnittes U ist im Zusatzelement 17 eine Aussparung 18 zum Durchführen der Rohlinge 2 radial nach aussen vorgesehen. Dazu soll der Abstand zwischen der Oberfläche des Drehtisches 20 und des Randes 19 der Aussparung 18 grösser als der Durchmesser DK1 (bzw. DK2 bei Schrauben 3) sein. Statt der Aussparung 18 könnte man ein Ringstück 17 vorsehen, welches im Umfangsbereich U unterbrochen ist. Auf ein Zusatzelement 17 könnte je nach Anwendungs- und Einsatzzweck aber auch verzichtet werden.

In einer Übergangsstelle 24 schliesst ein Schienenelement 25 an das als Leitblech ausgestaltete Leitelement 12 an. Das Schienenelement 24 ist ein flaches Profil, beispielsweise ein Blech aus Metall oder ein Profil aus Kunststoff oder ein Faserverbundwerkstoff. In der Übergangsstelle 24 ist das Schienenelement ersichtlicherweise etwa horizontal bzw. parallel zur Oberfläche des Drehtisches ausgerichtet. Die Ausrichtung des Schienenelements 25 geht kontinuierlich in eine horizontale Ausrichtung über. Das vertikal ausgerichtete (bzw. achsparallel zur Rotationsachse R verlaufende) Schienenelement 25 umschliesst ersichtlicherweise randseitig wenigstens einen Teil des Umfangs des Drehtisches 20. Am Ende des Schienenelements 25 ist eine Transportschiene 16 angeordnet.

Der Gleichricht-Prozess läuft im Wesentlichen wie folgt ab: ungeordnet anfallende Rohlinge 2 werden etwa mittig im Bereich innerhalb des Zusatzelements 17 auf den mit einer Winkelgeschwindigkeit ω um eine Rotationsachse R rotierenden Drehtisch 20 aufgegeben. Wegen der Zentrifugalkraft bewegen sich die Rohlinge 2 nach aussen, wobei wenigstens ein Teil der Rohlinge 2 derart vom Zusatzelement 17 erfasst werden, dass der Grundkörper 6 der Rohlinge radial nach aussen gerichtet und durch den Spalt durchgeführt ist. Der Kragen 4 sowie der Abschnitt mit dem Gewinde zeigen radial nach innen (vgl. Figur 1). Die derart vom Zusatzelement erfassten Rohlinge 2 bewegen sich dann aufgrund der Drehung des Drehtisches 20 auf einer Kreisbahn entlang des Zusatzelements 17 bis zur Aussparung 18, wo die Rohlinge 2 radial nach aussen in Richtung des Leitelements 12 durchgelassen werden. Eine derartige Vororientierung der Rohlinge 2 kann den Wirkungsgrad der Gleichrichtvorrichtung wesentlich erhöhen. Selbstverständlich kann es vorkommen, dass ein Teil der anfallenden Rohlinge 2 direkt durch die Aussparung 18 durchgeht. Die Rohlinge 2 werden dann mit Hilfe des Spaltes zwischen Leitelement 12 und Drehscheibe 20 vom Leitelement 12 am Kragen 4 erfasst, wobei - analog zum Zusatzelement 17 - der an den Kragen anschliessende Grundkörper 6 radial nach aussen durchgeführt ist. Die Rohlinge 2 bewegen sich auf einer Kreisbahn bis zu einer Übergangsstelle 24 entlang des Leitelements 12, wo die Rohlinge 2 von einem Schienenelement 25 erfasst werden.

Dank des relativ grossen Umfangs des Drehtisches ergibt sich dabei ein langer vorteilhafter Pufferspeicher für die Rohlinge. Die Rohlinge 2 werden nach einer Übergangsphase in hängender Position entlang des Randes des Drehtisches 20 zur Transportschiene 16 geführt. Die Rohlinge 2 ändern also ihre Ausrichtung. Im Bereich der Übergangsstelle 24 sind die Rohlinge 2 noch radial nach aussen gerichtet (die Achsen der Rohlinge verlaufen dabei etwa parallel zur Oberfläche), während im Bereich der Transportschiene 16 die Achsen der Rohlinge 2 in hängender Position je nach Neigung der Transportschiene 16 etwa vertikal verlaufen. Der Übergang der Rohlinge vom Leitelement 12 zum Schienenelement 25 kann beispielsweise dadurch ermöglicht werden, dass im Bereich der Übergangsstelle 24 eine entsprechende Ausnehmung im Leitelement 12 vorgesehen ist.

Wie aus Figur 7 hervorgeht, muss das Leitelement 12 in der Draufsicht nicht zwingend einen Kreis bilden. Das Leitelement 12 kann im Bereich der Seite, die der Aussparung 18 zum Durchlassen der Rohlinge zugewandt ist auch abgeflacht sein. Weiter ist aus Figur 7 erkennbar, dass das Leitelement 12 unmittelbar in das Schienenelement 25 übergehen kann.

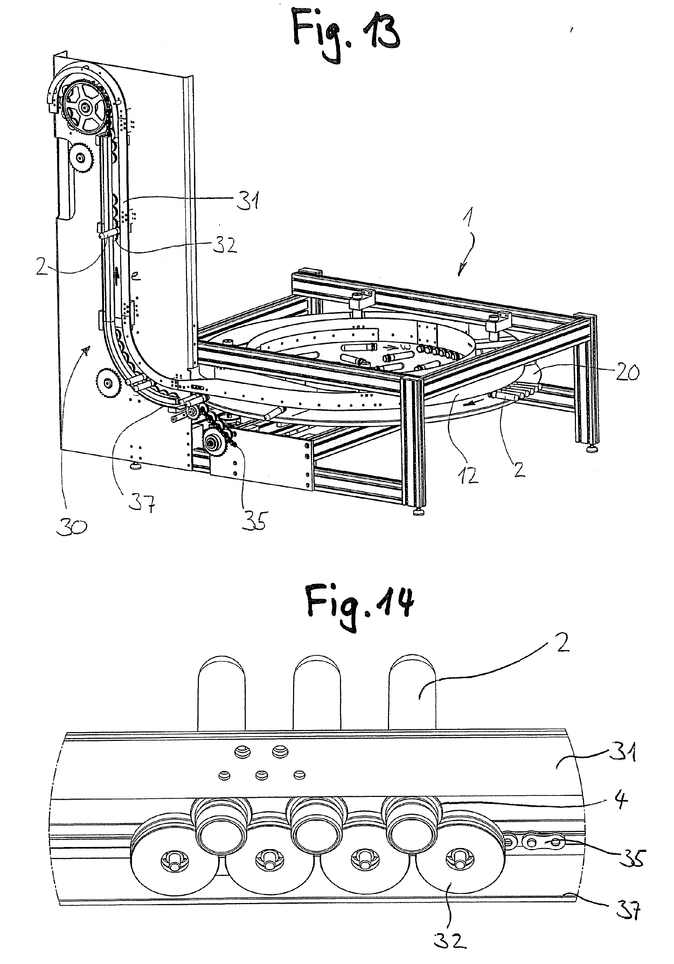

Die Seitenansicht sowie die Querschnittsdarstellungen der Vorrichtung 1 gemäss den Figuren 8 bis 10 zeigen insbesondere nochmals deutlich, dass die Rohlinge 2 im Einwirkbereich des Leitelements 12 (bzw. Zusatzelement 17) radial nach aussen gerichtet sind und in einer zur Oberfläche des Drehtisches 20 parallelen Ebene liegen. Im Einwirkbereich des Schienenelements 25 verlaufen die Rohlinge (mit Ausnahme eines Übergangsbereichs) etwa achsparallel zur Rotationsachse R des Drehtisches R. Wie etwa die Figuren 9 und 10 zeigen, sind das Leitelement 12 sowie das Zusatzelement 17 jeweils in einem Abstand A von der diesen Elementen zugewandten Oberfläche des Drehtisches angeordnet. Der Abstand A definiert den Spalt, durch welchen der Grundkörper 6 des Rohlings 2 durchführbar ist. Zum Erfassen des Rohlings 2 an seinem Kragen 4 muss deshalb die Abmessung des Spaltes zwischen dem Durchmesser des Grundkörpers D1 und dem Kragendurchmesser DK1 liegen.

Eine alternative Ausgestaltung eines Leitelements 12 ist in den Figuren 11 und 12 dargestellt. Hier ist das Leitelement 12 in der Draufsicht spiralförmig ausgestaltet. Wie in den vorhergehenden Beispielen ist das spiralförmige Leitelement 12 in einem Abstand vom Drehtisch bzw. von der Scheibe 11 angeordnet und bildet so einen Spalt zum Erfassen der Schrauben 3 an ihrem Schraubenkopf 7, wobei der Gewindeteil 8 der Schraube etwa radial nach aussen durchgeführt ist. Vorteil einer solchen Ausgestaltung ist, dass durch die Spiralform ein verhältnismässig langer Weg geschaffen wird, auf welchem die gleichzurichtenden Gegenstände geordnet werden können. Auf ein Zusatzelement (vgl. Element 17 gemäss vorhergehenden Ausführungsbeispielen) kann folglich verzichtet werden. Selbstverständlich könnten auch hier Rohlinge gemäss Ausführungsbeispiel von Figur 1 anstatt der Schrauben eingesetzt werden. Ersichtlicherweise geht das bandförmige Leitelement 12 in ein Schienenelement 15 einer Transportschiene über, wobei das Band des Leitelements 12 im Wesentlichen vertikal bzw. im rechten Winkel zur Scheibe 11 ausgerichtet ist und dass Schienenelement 15 (bzw. das weitere Schienenelement 14) eine etwa horizontale Ausrichtung aufweist. Am Ende der Transportschiene 16 ist ein Anschlag 22 zum Stauen der Schrauben 3 vorgesehen.

Figur 12 zeigt eine Variante mit mehreren Drehtischen bzw. Scheiben 11 sowie Leitelementen 12. Die koaxial angeordneten Scheiben 11 werden über eine gemeinsame Welle 23 angetrieben. Dabei werden sinnvollerweise je Scheibenetage 11 verschiedene Schraubengrössen/-typen gleichzeitig gleichgerichtet.

Figur 13 zeigt eine Transportvorrichtung 30, die durch die Vorrichtung 1 gleichgerichteten Rohlinge 2 übernimmt und weiter transportiert und sie beispielsweise einer (nicht gezeigten) Blaseinrichtung zum Herstellen von PET-Flaschen zuführt. Die Transportvorrichtung 30 wird mit Hilfe einer Kette 35 angetrieben, wodurch es insbesondere möglich ist, Rohlinge oder andere Gegenstände insbesondere aufwärts zu bewegen. Die Rohlinge 2 sind während des Transports einerseits zwischen zwei Rollen 32 und einer Führungsschiene 31 positioniert. Wie aus Figur 13 hervorgeht, halten die Rohlinge 2 sowohl während des Gleichricht-Prozesses als auch während dem Transportvorgang mit der Transportvorrichtung 30 ihre horizontale Lage bei. Selbstverständlich könnten die Rohlinge 2 auch in einer anderen Lage transportiert werden, beispielsweise in einer Überkopflage. Diese Transportlage wird oft für die Vorheizstrecke der Rohlinge 2 verlangt.

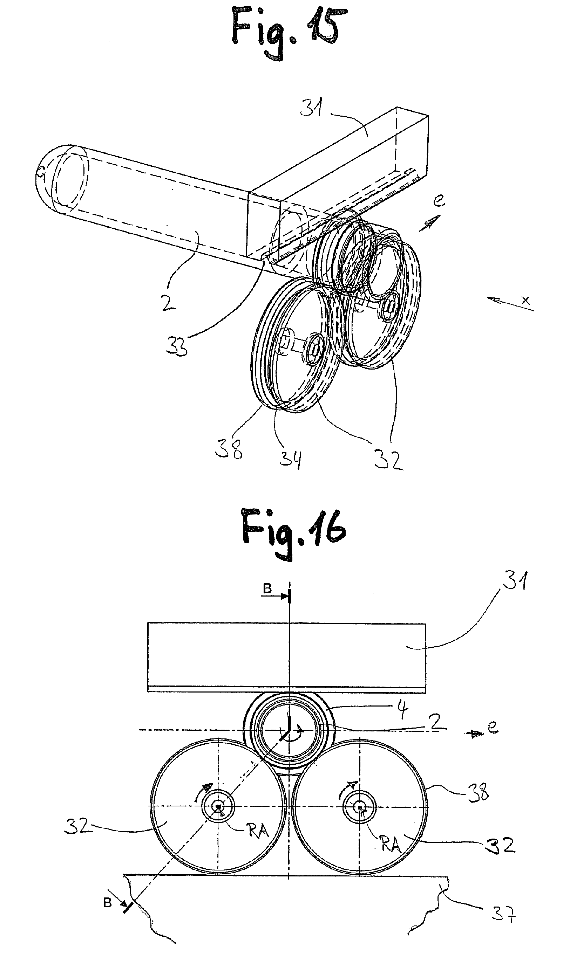

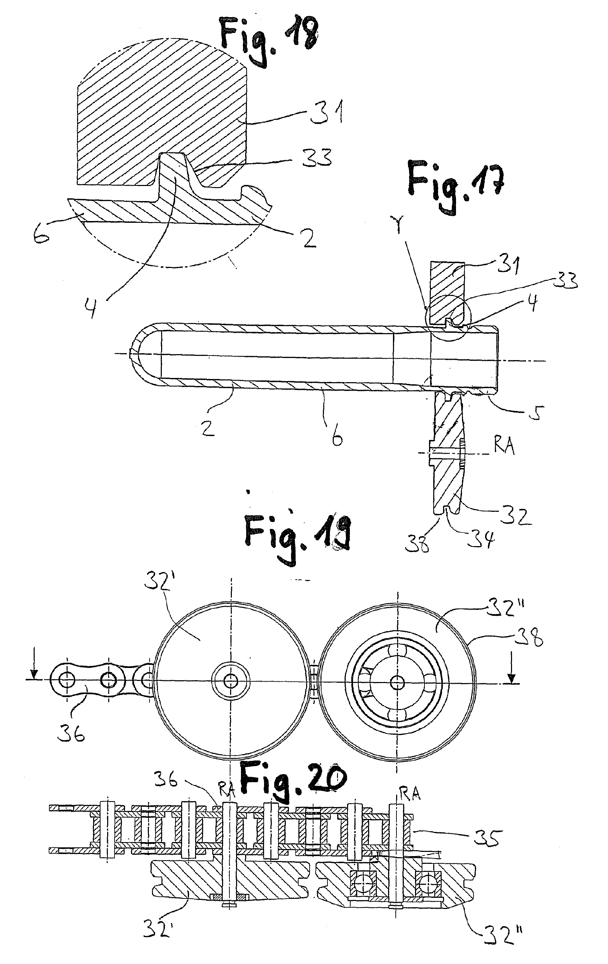

Die Figuren 14 bis 16 zeigen den prinzipiellen Aufbau einer Transportvorrichtung 30. Aus Figur 14 geht hervor, dass die Rohlinge 2 beim Transportvorgang zwischen der feststehenden Führungsschiene 31 und der Transportkette 35 mit der Mehrzahl in einer Reihe angeordneten Rolle 32 positioniert ist. Figur 16 zeigt deutlich, dass durch die Positionierung des Rohlings 2 zwischen der Führungsschiene 31 und den jeweils beiden Rollen 32 eine Drei-Punkte-Lagerung entsteht. In dieser Position verläuft die Achse des Rohlings 2 parallel zu den Rollenachsen RA der Rollen 32 somit kann der Rohling 2 rollend in e-Richtung bewegt werden (die jeweiligen Drehrichtungen sind mit einem Pfeil gekennzeichnet). Die Rollen 32 können ihrerseits entlang einer Rollenführung 37 in e-Richtung geführt sein. Anstatt der Rollen 32 könnte man auch starr mit der Transportkette verbundene Gleitkörper, beispielsweise Gleitmitnehmer vorsehen. Solche Gleitmitnehmer könnten beispielsweise aus Teflon® bestehen oder einen Teflon®-Überzug aufweisen. Wichtig wäre, dass der Kontaktpunkt oder allenfalls die Kontaktfläche zwischen Rohling und Gleitkörper bzw. Gleitmitnehmer möglichst reibungsarm ausgestaltet wäre.

Figur 17 zeigt die Positionierung des Rohlings 2 im Querschnitt in der Transportvorrichtung 30. Der Rohling 2 wird im Bereich seines Kragens 4 auf der einen Seite von der Führungsschiene 31 erfasst. Zur genauen Positionierung und Führung ist eine zum Kragen 4 etwa korrespondierende Führungsnut 33 vorgesehen (vgl. vergrösserte Darstellung gemäss Figur 18). Auf der gegenüberliegenden Seite wird der Rohling 2 von Rollen 32 erfasst, die eine im Rollenumfang 38 umlaufende Nut 34 aufweisen. Somit kann der Kragen 4 des Rohlings 2 (oder eine andere Profilkontur eines länglichen Gegenstandes) auf optimale Weise zum Transport ausgenutzt werden. Er unterliegt keinem Verschleiss und wird auch nicht beschädigt. Ferner steht diese freie Rohlingspartie für diverse Operationen, wie Vorwärmen oder QS-Prüfungen am gesamten Umfang zur Verfügung.

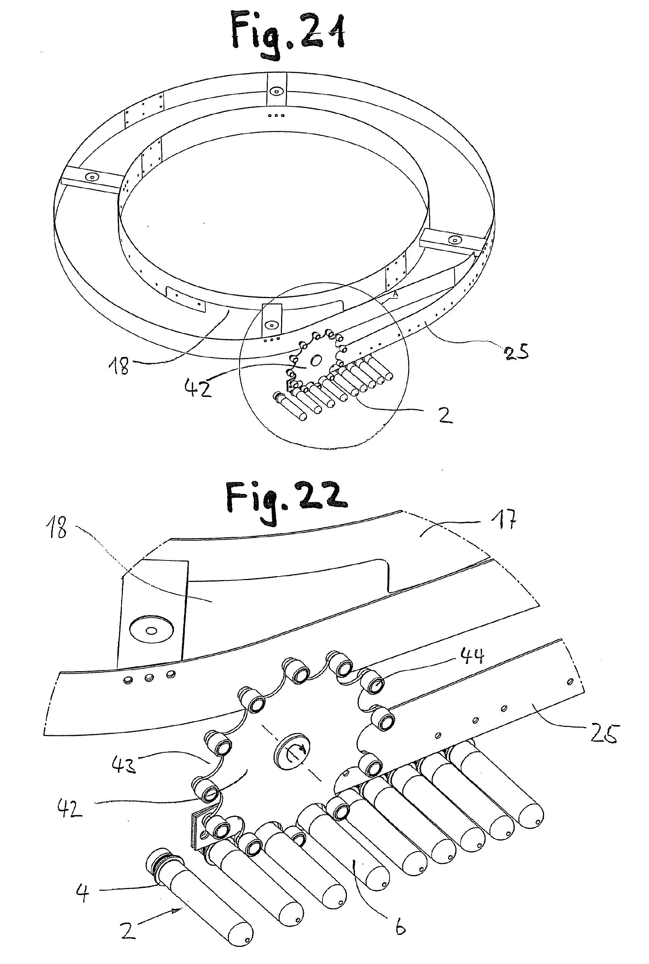

Figur 19 zeigt verschiedene mögliche Varianten von Lagerungen der Rollen: Die Rolle 32' ist mit einem Gleitlager und die Rolle 32" mit Hilfe eines Kugellagers drehbar gelagert. Wie aus Figur 20 hervorgeht befindet sich die Lagerung der Rollen 32' bzw. 32" bevorzugt auf verlängerten Gelenkachsen RA angeordnet, welche jeweils zwei Kettenelemente 36 gelenkig miteinander verbinden.

Selbstverständlich könnte man die Rollen auch starr mit der Kette verbinden. In diesem Fall sollte darauf geachtet werden, dass die Rollen aus einem gleitfähigen Material bestehen. Mit Hilfe solcher Gleitkörper könnte man die Rohlinge in Transportrichtung schieben. Eine Roll- oder Abwälzbewegung der Rohlinge ist also nicht zwingend erforderlich.

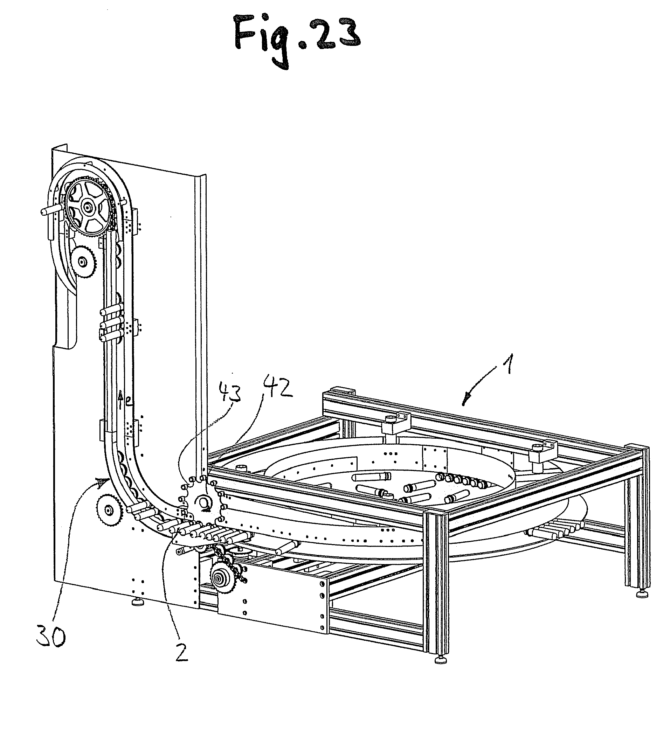

Figur 21 zeigt, dass etwa im Bereich des Endes des Schienenelements 25 oder im Übergangsbereich zur Transportvorrichtung (hier nicht gezeigt, siehe Figur 23) ein Eintaktrad 42 zum geordneten Bereitstellen der Rohlinge für die Transportvorrichtung angeordnet ist. Dieses Eintaktrad 42 weist - wie insbesondere aus Figur 22 hervorgeht - über seinem Umfang verteilte Aussparungen 43 auf. Die Aussparungen 43 korrespondieren zu den Rohlingen 2. Der Durchmesser der kreisförmigen Aussparung entspricht dabei in etwa dem Durchmesser eines Rohlings 2 (hier: Durchmesser von dessen Grundkörper). Das Eintaktrad 42 ist drehbar gelagert (die Rotationsachse ist mit einer entsprechenden Linien gekennzeichnet). Die Aussparungen 43 sind derart auf dem Umfang des Eintaktrads 42 angeordnet, das durch Passieren des Eintaktrads 42 die Rohlinge 2 derart in einem Abstand voneinander positioniert werden, welcher dem Abstand zwischen den Rollen entspricht (vgl. Figur 14). Zur einfachen Handhabung der Rohlinge 2 sind dazu zwischen den Aussparungen 43 Abstandelemente 44 angeordnet. Diese Abstandelemente 44 sind vorliegend als zylindrische Körper ausgestaltet.

Wie aus Figur 23 hervorgeht, dient das Eintaktrad 42 zur geordneten Übergabe der Rohlinge 2 von der Gleichricht-Vorrichtung 1 an die Transportvorrichtung 30. Da die Rohlinge 2 mit Hilfe des Eintaktrads 42 im richtigen Abstand bereitgestellt werden, wird ein Verklemmen der Rohlinge 2 in der Transportvorrichtung 30 verunmöglicht. Selbstverständlich sind auch andere Systeme zur taktweisen Übergabe der Rohlinge auf die Transportvorrichtung vorstellbar.

## Patentansprüche

1. Vorrichtung zum Gleichrichten von länglichen, vorzugsweise zylindrischen Gegenständen mit einer Profilkontur, mit einem um eine Rotationsachse (R) drehbaren Drehtisch (20) zur Aufnahme der ungeordneten Gegenstände, **dadurch gekennzeichnet, dass** über dem Drehtisch (20) in einem Umfangsbereich ein Leitelement (12) derart angeordnet ist, dass zwischen dem Drehtisch (20) und dem Leitelement (12) ein Spalt (13) zum Erfassen der Gegenstände an seiner Profilkontur und zum Bewegen der Gegenstände entlang des Leitelements in Drehrichtung gebildet ist, wobei ein sich an die Profilkontur anschliessender Abschnitt der Gegenstände jeweils radial nach aussen durch den Spalt (13) durchführbar ist.

2. Vorrichtung nach Anspruch 1, **dadurch gekennzeichnet, dass** das Leitelement (12) in der Draufsicht vorzugsweise etwa kreisförmig ausgestaltet ist.

3. Vorrichtung nach Anspruch 1, **dadurch gekennzeichnet, dass** das Leitelement (12) in der Draufsicht spiralförmig ausgestaltet ist.

4. Vorrichtung nach einem der Ansprüche 1 bis 3, **dadurch gekennzeichnet, dass** das Leitelement (12) den Rand des Drehtisches (20) wenigstens teilweise begrenzt.

5. Vorrichtung nach einem der Ansprüche 1 bis 4, **dadurch gekennzeichnet, dass** das Leitelement (12) ein Leitprofil, insbesondere ein Leitblech ist.

6. Vorrichtung nach einem der Ansprüche 1 bis 5, **dadurch gekennzeichnet, dass** zum Kanalisieren der Gegenstände auf dem Drehtisch wenigstens ein Zusatzelement (17) vorgesehen ist, welches in Bezug auf das Leitelement (12) koaxial nach innen versetzt, insbesondere konzentrisch angeordnet ist und wobei das Zusatzelement (17) in einem Umfangsabschnitt (U) eine Freistellung, insbesondere eine Aussparung (18) zum Durchlassen der Gegenstände radial nach aussen aufweist.

7. Vorrichtung nach Anspruch 6, **dadurch gekennzeichnet, dass** zum Vororientieren der Gegenstände zwischen dem Drehtisch (20) und dem Zusatzelement (17) ein Spalt (21) zum Erfassen der Gegenstände an seiner Profilkontur und zum Bewegen der Gegenstände entlang des Zusatzelements (17) vorgesehen ist.

8. Vorrichtung nach einem der Ansprüche 1 bis 7, **dadurch gekennzeichnet, dass** das Leitelement (12) in eine Transportschiene (16) enthaltend zwei in einem Abstand zueinander angeordneten parallelen Schienenelementen (14, 15), die einen Spalt (39) zum hängenden Transportieren der Gegenstände zwischen den Schienenelementen bilden, übergeht, wobei der Spalt (39) zwischen den Schienenelementen (14, 15) sich an den Spalt (13) zwischen Drehtisch (20) und Leitelement (12) anschliesst.

9. Vorrichtung nach Anspruch 8, **dadurch gekennzeichnet, dass** das äussere Schienenelement (15) unmittelbar an das Leitelement (12) anschliesst.

10. Vorrichtung nach einem der Ansprüche 1 bis 7, **dadurch gekennzeichnet, dass** eine antreibbare Transportvorrichtung (30) zum Weitertransport der durch den Drehtisch (20) und das Leitelement (12) gleichgerichteten Gegenstände vorgesehen ist.

11. Vorrichtung nach Anspruch 10, **dadurch gekennzeichnet, dass** die Transportvorrichtung (30) eine feststehende Führungsschiene (31) und eine Mehrzahl von entlang der Führungsschiene in Transportrichtung (e) bewegbaren, in einer Reihe angeordneten Rollen (32) mit einer Rollenachse (RA) aufweist, wobei die Rollenachse (RA) etwa rechtwinklig zur Transportrichtung (e) verläuft und dass die Rollen (32) derart von der Führungsschiene (31) beabstandet sind, dass jeweils zwischen zwei Rollen (32) und der Führungsschiene (31) ein Gegenstand positionierbar ist.

12. Vorrichtung nach Anspruch 11, **dadurch gekennzeichnet, dass** die Führungsschiene (31) der Transportvorrichtung (30) eine Führungsnut (33) und/oder die Rollen (32) jeweils im Bereich des Rollenumfangs (38) eine umlaufende Nut (34) aufweisen, wobei die Führungsnut (33) der Führungsschiene (31) bzw. die umlaufende Nut (34) der Rollen (32) zum formschlüssigen Erfassen der Rohlinge (2) ausgebildet sind.

13. Vorrichtung nach einem der Ansprüche 11 bis 12, **dadurch gekennzeichnet, dass** zum Bewegen der Rollen (32) der Transportvorrichtung (30) in Transportrichtung (e) Zugmittel, enthaltend insbesondere eine Kette (35) oder einen Zahnriemen, vorgesehen sind.

14. Vorrichtung nach einem der Ansprüche 11 bis 13, **dadurch gekennzeichnet, dass** das Zugmittel eine Kette (35) mit einer Mehrzahl von Kettenelementen (36) ist und dass die Rollen (32) auf verlängerten Gelenkachsen (RA) angeordnet sind, welche zwei Kettenelemente (36) gelenkig miteinander verbinden.

15. Vorrichtung nach einem der Ansprüche 11 bis 14, **dadurch gekennzeichnet, dass** eine parallel zur Führungsschiene (31) verlaufende Rollenführung (37) für die Rollen (32) vorgesehen ist, wobei die Rollenführung (37) die Rollen (32) abstützt.

16. Transportvorrichtung (30) zum Transport von länglichen, vorzugsweise zylindrischen Gegenständen mit einer Profilkontur, insbesondere zum Weitertransport der durch eine Vorrichtung nach einem der Ansprüche 1 bis 7 gleichgerichteten Gegenstände, **dadurch gekennzeichnet, dass** die Transportvorrichtung (30) eine feststehende Führungsschiene (31) und eine Mehrzahl von entlang der Führungsschiene in Transportrichtung (e) bewegbaren, in einer Reihe angeordneten Gleit- oder Wälzkörpern, insbesondere Gleitmitnehmer oder Wälzkörper in Form von Rollen (32) aufweist, wobei die Gleit- bzw. Wälzkörper derart von der Führungsschiene (31) beabstandet sind, dass jeweils zwischen zwei Gleit- bzw. Wälzkörpern und der Führungsschiene (31) ein Gegenstand erfassbar und auf der der Führungsschiene (31) abwälzbar oder schiebbar ist.

17. Verwendung einer Vorrichtung (1) nach einem der Ansprüche 1 bis 9 zum Gleichrichten von Rohlingen (2) zur Herstellung von Kunststoff-Behältern durch Blasformgebung, insbesondere für Pet-Flaschen, die einen umlaufenden Kragen (4) als Profilkontur aufweisen.

18. Verwendung einer Vorrichtung (1) nach einem der Ansprüche 1 bis 10 zum Gleichrichten von Schrauben mit einem Schraubenkopf (7) als Profilkontur.

19. Verwendung einer Transportvorrichtung (30) nach Anspruch 16 für den Transport von Rohlingen (2) zur Herstellung von Kunststoff-Behältern durch Blasformgebung, insbesondere für Pet-Flaschen und insbesondere zum Zuführen an eine Blaseinrichtung zum Herstellen von Pet-Flaschen.

20. Verfahren zum Gleichrichten von ungeordnet anfallenden länglichen, vorzugsweise zylindrischen Gegenständen mit einer Profilkontur, bei welchem die Gegenstände über eine Zuführeinrichtung (10) etwa mittig auf einen um eine Rotationsachse (R) rotierenden Drehtisch (20) aufgegeben werden und auf dem Drehtisch einer Zentrifugalkraft ausgesetzt werden, **dadurch gekennzeichnet, dass** die Gegenstände an einem im Umfangsbereich des Drehtisches (20) angeordneten Leitelement (12) derart an der Profilkontur erfasst werden, dass ein sich an die Profilkontur anschliessender Abschnitt des Gegenstands radial nach aussen durchgeführt wird.

21. Verfahren nach Anspruch 20, **dadurch gekennzeichnet, dass** die Gegenstände unter Beibehaltung ihrer radialen Ausrichtung und unter Ausnützung der Drehbewegung des Drehtisches (20) vorzugsweise rollend entlang des Leitelements (12) bewegt werden.

22. Verfahren nach Anspruch 20 oder 21, **dadurch gekennzeichnet, dass** die Gegenstände durch eine Aussparung (18) eines in Bezug auf das Leitelement (12) nach innen versetzt angeordnetes Zusatzelement (17) hindurch gelassen werden.

23. Verfahren nach Anspruch 22, **dadurch gekennzeichnet, dass** die Gegenstände zum Vororientieren derart durch einen Spalt (21) zwischen Drehtisch (20) und Zusatzelement (17) an der Profilkontur erfasst werden, dass ein sich an die Profilkontur anschliessender Abschnitt des Gegenstands radial nach aussen durchgeführt wird und die Gegenstände unter Ausnützung der Drehbewegung des Drehtisches (20) vorzugsweise rollend in Drehrichtung des Drehtisches entlang des Leitelements (12) bewegt werden.

24. Verfahren zum Transportieren von länglichen, vorzugsweise zylindrischen Gegenständen mit einer Profilkontur, insbesondere von Rohlingen (2) zur Herstellung von Kunststoff-Behältern, insbesondere für Pet-Flaschen, durch eine Transportvorrichtung (30) insbesondere nach Anspruch 16, **dadurch gekennzeichnet, dass** die Gegenstände derart von einer feststehenden Führungsschiene (31) und jeweils zwei in Transportrichtung (e) bewegten Rollen (32) oder Gleitmitnehmern einer Transportvorrichtung (30) erfasst werden, dass sie in einer Dreipunktelagerung rollend zwischen der Führungsschiene (31) und den Rollen in Transportrichtung (e) bewegt werden oder dass sie in einer Dreipunktelagerung zwischen der Führungsschiene (31) und den Gleitmitnehmern gehalten und entlang der Führungsschiene (31) rollend in Transportrichtung (e) bewegt oder in Transportrichtung (e) geschoben werden.

25. Verfahren nach Anspruch 24, **dadurch gekennzeichnet, dass** die Gegenstände mit Hilfe der Transportvorrichtung (30) von unten nach oben transportiert werden.

26. Verfahren nach Anspruch 24 oder 25, **dadurch gekennzeichnet, dass** die Gegenstände Rohlinge (2) zur Herstellung von Kunststoff-Behältern durch Blasformgebung, insbesondere für Pet-Flaschen sind und die Rohlinge (2) mit Hilfe der Transportvorrichtung (30) über Kopf einer Blaseinrichtung zum Herstellen von Pet-Flaschen zugeführt werden.
